# EUROPEAN PATENT SPECIFICATION

(11) **EP 0 347 863 B1**
(45) Date of publication and mention of the grant of the patent: **22.12.1993**
(21) Application number: 89111245.0
(22) Date of filing: 20.06.1989
(51) Int. Cl.: G03G 15/04, G03B 27/52

(54) **Document reader**
Dokumentenleser
Lecteur de document

(30) Priority: 22.06.1988 JP 153835/88
(43) Date of publication of application: 27.12.1989
(73) Proprietor: MITA INDUSTRIAL CO., LTD., Osaka 540 (JP)
(72) Inventor: Yamada, Syuji, Kobe-shi Hyogo 653 (JP)
(74) Representative: Schwan, Gerhard, Dipl.-Ing.

(56) References cited:
- DE-A- 3 444 174
- US-A- 4 645 328
- PATENT ABSTRACTS OF JAPAN, vol. 10, no. 45 (P-430)[2102], 21st February 1986; & JP-A-60 191 277 (FUJI XEROX K.K.) 28-09-1985

## Description

The present invention relates to a document reader, e.g. a document reader used in an image forming apparatus, such as a copying machine, to read a document.

From DE-A-3 444 174 a heat fixing device is known which comprises fixing means for fixing particles onto a base material by heating; detecting means for detecting environmental conditions surrounding and/or applied to to the fixing means; and control means responsive to the detecting means, for controlling the speed or number of the base material passing through the fixing means. In a particular embodiment the prior heat fixing means is used in an optical system movement type electrophotographic copying machine, and variations in the power voltage applied to the heat fixing device are detected. The backward movement speed of the optical system moved along the document table, for scanning the document to be copied, is controlled as a function of the detected variations so as to decrease the number of the copied papers passing between the fixing rollers or the copy speed when the applied power voltage falls.

The principle part of a copying machine provided with a document reader is shown in Fig. 1 and Fig. 2. Copying machines of this type are e.g. known from US-A-4 645 328.

One of the documents set on a document tray 12 is uptaken in the body of the copying machine 1 by a feed roller 13, and is carried to a fixed reading position on a document glass plate 5 by a feed in/out roller 14. Such feed roller 13 and feed in/out roller 14 are actuated by an ADF (automatic document feed) motor 17.

The document is read by one-way movement of a reading unit 4 along the underside of the document glass plate 5 so as to scan the overall document. The reading unit 4 is moved by means of a scan motor 23, e.g. a servo-motor or stepping motor. After reading, the document is fed out from the document glass plate 5 into a document assist tray 16 by reversing actuation of the feed in/out roller 14. Afterwards the reading unit 4 returns to its home position.

A main control circuit 2 of the copying machine 1 detects the switch-status of a paper-feed resist switch 3, a TIM switch 25, and an HP (home position) switch 26. In accordance with the results of each switch-status, the main control circuit 2 controls the ADF motor 17 via an ADF motor control circuit 18 connected between them, and controls the scan motor 23 via a scan motor control circuit 24 connected between them.

The power for energizing the ADF motor 17 and the scan motor 23 is supplied from a +24V power source 8 in a power circuit 7.

The means for feeding in/out a document (as described ADF hereinafter) is generally composed of the document tray 12, the ADF motor control circuit 18 and the common components, e.g. the main control circuit 2 and the power circuit 7, and the means for scanning/returning is generally composed of the scan motor 23, HP switch 26 and said common components.

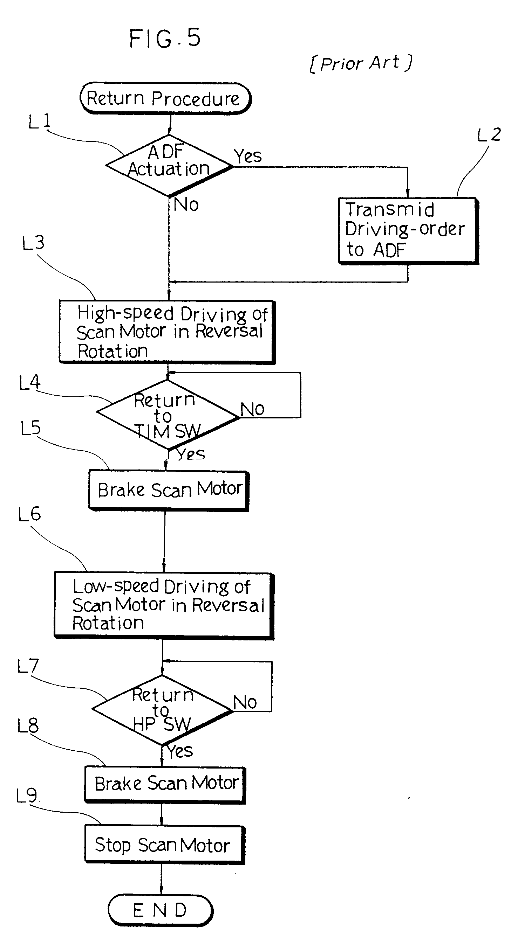

In a conventional document reader Now the scan motor 23 on returning towards its home position, is controlled in accordance with the procedure of the flowchart shown in Fig. 5. In the first place, it is judged whether a document is fed in and out by driving the ADF (L1). The scan motor 23 is driven in the reverse direction of rotation at a relative high speed as it is in case of non-actuation of the ADF (L3). Conversely in case of actuation of the ADF, the actuation order signal is sent to it (L2).

After that, the scan motor 23 is driven in the reverse direction of rotation at said speed (L3). At this time, the scanning speed V₁ of the reading unit 4, for instance about 300 mm/sec, is approximately equal to three times the speed in scanning a document at an equi-magnification copying operation.

After the reading unit 4 arrives at the TIM switch 25 (L4), the scan motor 23 is driven in the normal direction of rotation for a short time to brake the reading unit 4 (L5). Next the scan motor 23 is driven in the reverse direction of rotation at a lower speed than that hitherto used (L6). The scanning speed V₂, for instance about 100 mm/sec, is nearly equal to the speed in scanning a document at an equi-magnification copying at this time.

The scan motor 23 is driven again in the normal direction of rotation for a short time to brake the reading unit 4 (L8) after the HP switch 26 detects a return of the reading unit 4 to its home position (L7). Afterwards the scan motor 23 should stop (L9).

As previously noted, in the conventional document reader, the return speed of the reading unit 4 is independent of the actuation of the ADF.

In regard to the copying machine 1 mentioned above, the power is supplied to the ADF motor 17 and the scan motor 23 from the +24V power source 8.

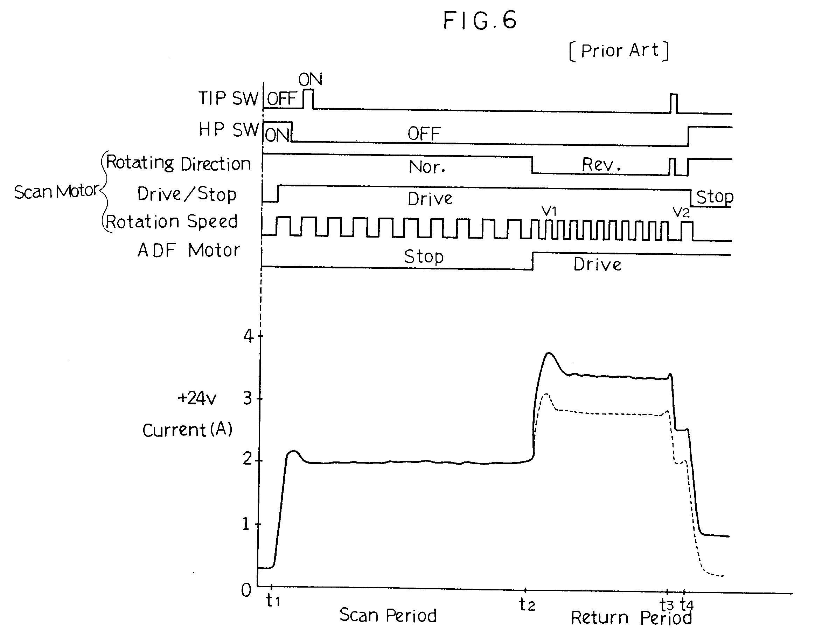

The current for the return period t₂ - t₄ increases as shown in Fig. 6.

Particularly, the current increases slightly as shown in Fig. 6 by a broken line in case of high speed driving of only the scan motor 23 without driving of the ADF motor 17, or it increases markedly as shown by a solid line in Fig. 6 in case of high speed driving of the scan motor 23 together with driving of the ADF motor 17.

Therefore it causes the problem that a +24V power source 8 of large capacity is required with provision against the case of a high speed driving of the scan motor 23 together with a driving of the ADF motor 17. For this reason, it also causes the problem that the loss of the power consumption becomes large.

The present invention was made to solve the conventional problems as stated above.

It is hence the general object of this invention to provide a document reader which has a relatively small power loss and which requires a relatively low power capacity.

In conformity with the present invention a document reader suitable for use in an image forming apparatus comprising:
i) means for feeding a document in resp. out to resp. from a fixed reading position;
ii) a reading unit for scanning the document; and
iii) means or scanning said reading unit along the document and returning it to its home position;
is characterized in that it further comprises:
iv) switching means which is adapted to select the returning speed of said reading unit, so that
   said reading unit is made to return at a first speed when said feeding means is not actuated, and
   said reading unit is made to return at a second speed slower than the first speed when said feeding means is actuated.

In the document reader of the present invention, preferably the return speed of the reading unit 4 should be established at a high value relatively similar to a conventional document reader in case the reading unit 4 repeatedly scans several times along the same document.

Accordingly the time required becomes short to read a document continuously. At this time, no large amount of current is consumed owing to non-actuation of the means for feeding in and out a document.

However, the return speed should be set to a relatively low value in case of actuation of the means for feeding in and out a document. Therefore since the share of the supplied power with means for scanning and returning does not increase very much notwithstanding increase of the share of those with means for feeding in and out a document, the total current value will become smaller than in case the reading unit 4 returns at the relative high speed.

After all, the document reader of the present invention should not require a large power capacity, and can have a little loss of power.

The invention will be better understood from the following description of a preferred embodiment taken in connection with the accompanying drawings in which :
Fig. 1 is a sectional part of the principle part of a copying machine provided with a document reader;
Fig. 2 is a diagram of the principle circuit controlling the copying machine;
Fig. 3 is a flowchart showing the procedures of actuation of the document reader related to the present invention;
Fig. 4 is a waveform graph of some part in the circuit shown in Fig. 2;
Fig. 5 is a flowchart showing the conventional procedure of actuation of the document reader in its return movement; and
Fig. 6 is a waveform graph, similar to that of Fig. 4, obtained as a result of the execution of the conventional procedure.

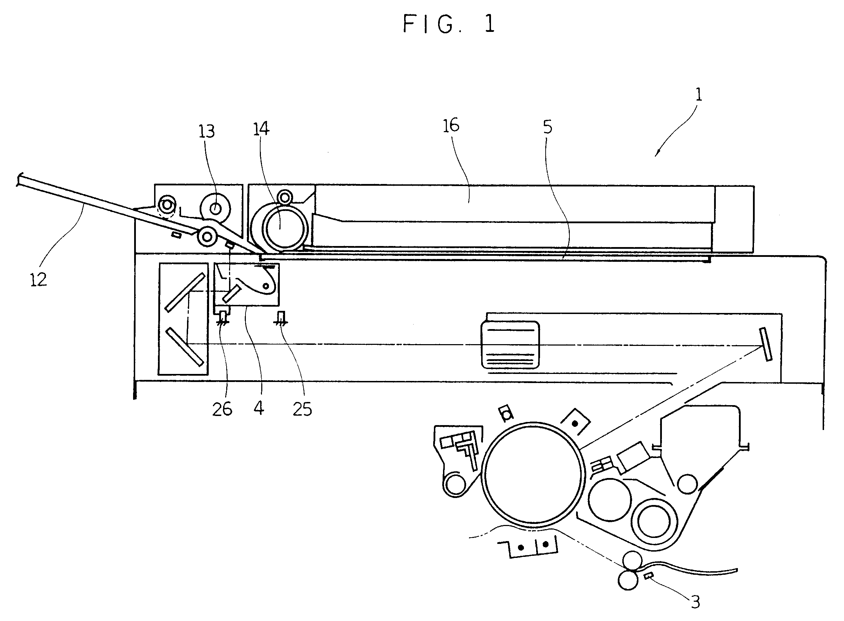

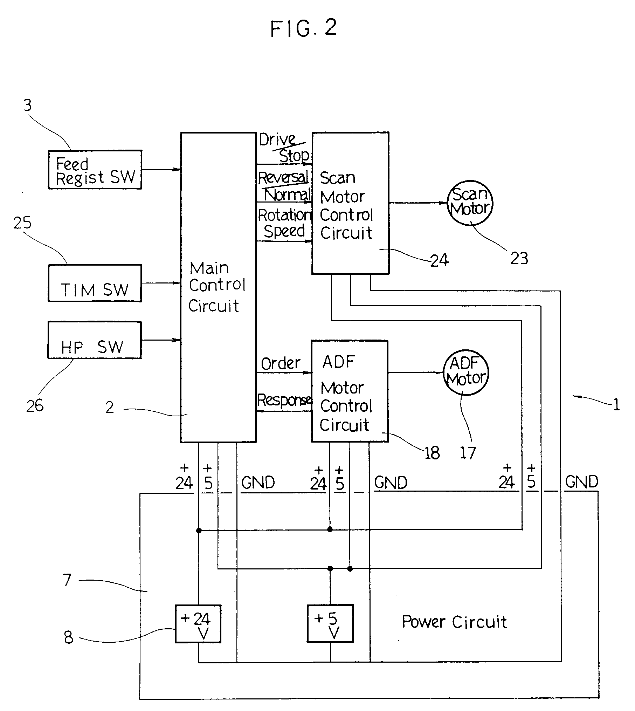

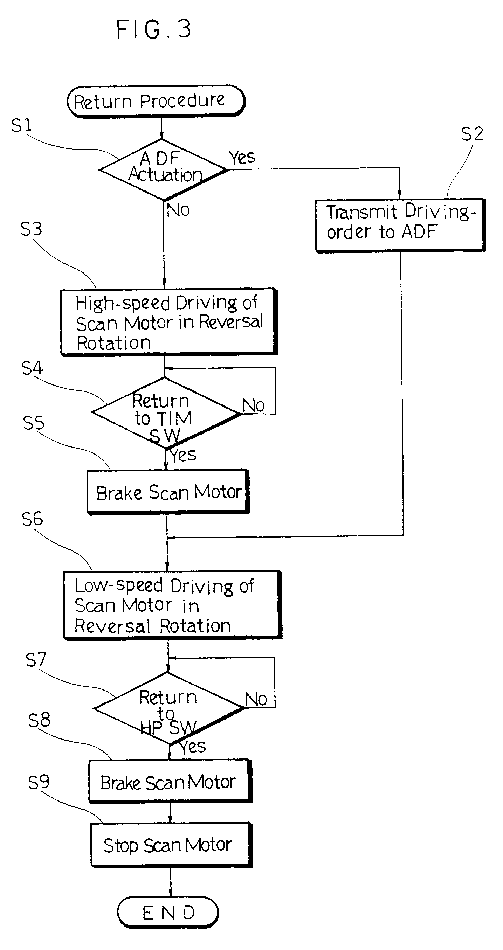

Fig. 1 and Fig. 2 show the principle parts of a document reader and a copying machine. A detailed description of the composition, however, is omitted in view of the foregoing description. Therefore the actuation of the document reader related to the present invention will be explained referring to Fig. 3 in the following.

The conclusion of the reading scan along a document with the reading unit 4 is detected by means of the detection of the paper rear end with a feed resist switch 3. Thereupon the "return procedure" should be started.

First it is checked about the actuation of the ADF (S1). Explaining the concrete details of the judgement, the actuation of the ADF is judged in case of the direction of the ADF employment and of non-execution of re-scanning along the document, or is not judged except for the foregoing case. The scan motor 23 will be driven in the reverse direction of rotation at a relatively high speed in the case of non-actuation of the ADF, and the reading unit 4 will return at a relatively high speed, e.g., 300 mm/sec (S3).

The passage of the reading unit 4 is detected with the TIM switch 5 (S4), then the scan motor 23 brakes the reading unit 4 by means of driving in the normal direction of rotation for a short time (S5).

In the second place, the scan motor 23 is driven in the reverse direction of rotation at the relatively lower speed than that up to present, and the reading unit 4 returns at the lower speed V₂ (for instance, 100 mm/sec) than that hitherto used.

When the arrival of the reading unit 4 at its home position is detected by the HP switch 26 (S7), the scan motor 23 is driven in the normal direction of rotation for a short time to brake the reading unit 4 (S8), and in the next step, the scan motor 23 should stop (S9).

The above actuation of high speed return is similar to the conventional one, so the effect of shortening the required time is obtained in the continuous copying of the same document. At that time, the +24V power source 8 is not required to supply a large current since the ADF need not be actuated. The current waveform of the +24V power source 8 is shown as a broken line in Fig. 6.

In succession, judging the actuation of the ADF (S1), the actuation order signal is sent to the ADF (S2), and the scan motor 23 is driven in the reverse direction of rotation at a relativly low speed (S6). The speed of the scan motor 23 at this time is equal to that after the reading unit 4 in its relative high speed return passed by the TIM switch 25.

The switching of the speed of the reading unit 4 just having passed by the TIM switch 25 must not be necessary because of the driving of the scan motor 23 based on the above-stated procedure, so that the control for the scan motor 23 becomes easy. Without restriction of the operational condition mentioned above, however, the speed of the scan motor 23 may be more than the minimum speed at which the reading unit 4 can return while the ADF feeds a document in and out, and it may be less than the maximum one which would not carry the excessive load on the power source. Also the speed of the scan motor 23 may be changed according to the moving distance of the reading unit 4 in the reading scan.

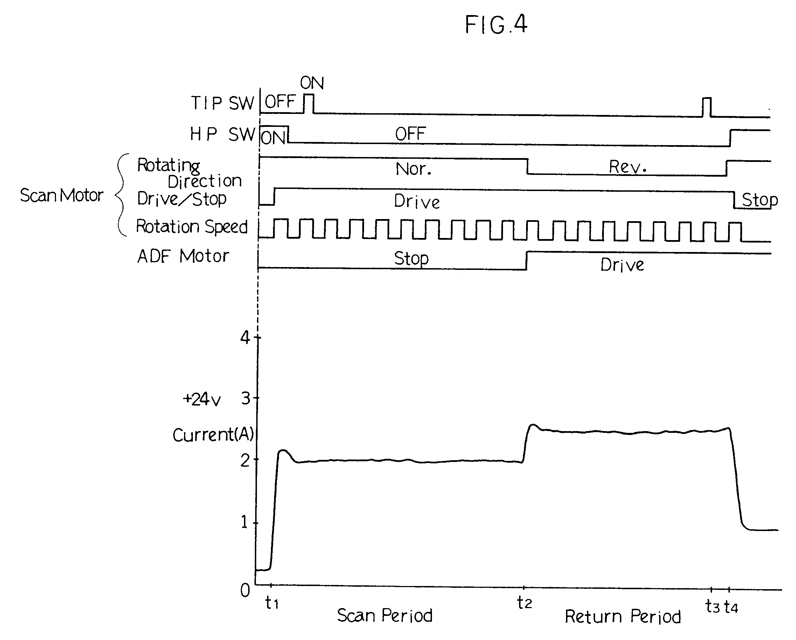

Going ahead with the explanation, the scan motor 23 is driven in the normal direction of rotation for a short time to brake the reading unit 4 after the arrival of the reading unit 4 at its home position is detected by the HP switch 26 (S7), and the scan motor 23 stops (S9). The current waveform of the +24V power source 8 at this time is shown in Fig. 4. During the return period t₂ - t₄ thereof, the current required only for the ADF increases more than that in the scan period t₁ - t₂. Therefore the required power should be less than that of the conventional document reader. As mentioned above, the capacity of the +24V power source 8 may be relatively small, and the loss of power may become smaller after all because the current for driving the ADF motor 17 and that for driving the scan motor 23 at high-speed are not required at the same time.

In the foregoing embodiment of the document reader of the present invention, the same-time execution of the actuation of means for feeding in/out a document and of means for scanning and returning at high-speed can be avoided. Therefore the large amount of current must not flow, and a power source with a large capacity is not required, the loss of power can be decreased as well.

Furthermore, an image forming apparatus possessing the ADF as an option must initially have a power source unit with pretty large capacity in order to supply the power to the ADF. For that reason, the power source unit has a low efficiency without the attachment of the ADF to said apparatus.

However, the loss of power can become less even in case the ADF is not attached because the required capacity of the power source unit can become lower by means of the present invention.

## Claims

1. A document reader comprising:
i) means (13, 14, 17, 18) for feeding a document to or from a fixed reading position;
ii) a reading unit (4) for scanning the document; and
iii) means (23, 26) for scanning said reading unit (4) along the document and returning it to its home position;
characterized in that it further comprises:
iv) switching means (2, 24) which is adapted to select the returning speed of said reading unit (4), so that
said reading unit (4) is made to return at a first speed when said feeding means (13, 14, 17, 18) is not actuated, and
said reading unit (4) is made to return at a second speed slower than the first speed when said feeding means (13, 14, 17, 18) is actuated.

## Patentansprüche

1. Dokumentenleser mit:
i) einer Anordnung (13, 14, 17, 18) zum Fördern eines Dokuments zu oder von einer festen Leseposition;
ii) einer Leseeinheit (4) zum Abtasten des Dokuments; und
iii) einer Anordnung (23, 26) zum Verstellen der Leseeinheit (4) entlang dem Dokument und zum Zurückbringen derselben in ihre Ausgangsstellung;
dadurch gekennzeichnet, daß er ferner versehen ist mit:
iv) einer Schaltanordnung (2, 24), mittels deren die Rücklaufgeschwindigkeit der Leseeinheit (4) wählbar ist, so daß
die Leseeinheit (4) veranlaßt wird, mit einer ersten Geschwindigkeit zurückzulaufen, weg die Förderanordnung (13, 14, 17, 18) nicht betätigt wird, und
die Leseeinheit (4) veranlaßt wird, mit einer zweiten Geschwindigkeit zurückzulaufen, die niedriger als die erste Geschwindigkeit ist, wenn die Förderanordnung (13, 14, 17, 18) betätigt wird.

## Revendications

1. Lecteur de documents comportant :
i) des moyens (13, 14, 17, 18) pour faire avancer un document vers une position fixe de lecture ou à partir de cette position ;
ii) une unité (4) de lecture pour balayer le document ; et
iii) des moyens (23, 26) pour amener ladite unité (4) de lecture à balayer le document et pour la ramener dans sa position de repos ;
caractérisé en ce qu'il comporte en outre :
iv) des moyens de commutation (2, 24) qui sont conçus pour sélectionner la vitesse de retour de ladite unité (4) de lecture, de manière que
ladite unite (4) de lecture soit amenée à revenir à une première vitesse lorsque lesdits moyens d'avance (13, 14, 17, 18) ne sont pas actionnés, et
que ladite unité (4) de lecture soit amenée à revenir à une seconde vitesse inférieure à la première vitesse lorsque lesdits moyens d'avance (13, 14, 17, 18) sont actionnés.
